(19) Europäisches Patentamt
European Patent Office
Office européen des brevets

(11) **EP 4 124 816 A1**

(12) **EUROPÄISCHE PATENTANMELDUNG**

(43) Veröffentlichungstag:
**01.02.2023   Patentblatt 2023/05**

(21) Anmeldenummer: **21188267.5**

(22) Anmeldetag: **28.07.2021**

(51) Internationale Patentklassifikation (IPC):
**F27D 21/00** *(2006.01)*     **F27B 17/02** *(2006.01)*
**F27D 19/00** *(2006.01)*

(52) Gemeinsame Patentklassifikation (CPC):
**F27D 21/0014; F27B 17/025; F27D 19/00**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Ivoclar Vivadent AG
9494 Schaan (LI)**

(72) Erfinder:
• **Müller, Dominik
6844 Altach (AT)**
• **Vogt, Martin
9496 Balzers (LI)**
• **Schlegel, Manuel
8887 Mels (CH)**

(74) Vertreter: **Baldus, Oliver et al
Splanemann Patentanwälte
Rumfordstr. 7
80469 München (DE)**

(54) **DENTALOFEN UND VERFAHREN ZUM BETRIEB EINES DENTALOFENS**

(57)     Es ist ein Dentalofen, insbesondere zur Vortrocknung von Dentalrestaurationsteilen oder zur Entbinderung von Dentalrestaurationsteilen, mit einem Heizraum und mindestens einem elektrischen Heizelement, einer Leistungssteuervorrichtung für das Heizelement, einer Temperaturerfassungsvorrichtung vorgesehen, mit welcher die Temperatur im Heizraum erfassbar ist. Die Temperaturerfassungsvorrichtung ist insbesondere als Thermoelement oder als optisches Temperaturmesssystem zur direkten Erfassung der Temperatur des Dentalrestaurationsteils ausgebildet. Eine Prozesskontrollvorrichtung ist mit der Temperaturerfassungsvorrichtung und mit der Leistungssteuervorrichtung zur Regelung der Leistungssteuervorrichtung verbunden. Die Prozesskontrollvorrichtung weist eine Stromsteuervorrichtung auf, mit welcher, insbesondere bei einem fehlendem Messsignal der Temperaturerfassungseinrichtung, die Leistungssteuervorrichtung steuerbar ist.

Fig. 3

**Beschreibung**

Die Erfindung betrifft einen Dentalofen gemäß dem Oberbegriff von Anspruch 1 sowie ein Verfahren zum Betrieb eines Dentalofens gemäß dem Oberbegriff von Anspruch 6.

Ein bekannter Dentalofen weist einen Heizraum mit mindestens einem elektrischen Heizelement, eine Leistungssteuervorrichtung für das Heizelement, und eine Temperaturerfassungsvorrichtung auf, mit welcher die Temperatur im Heizraum erfassbar ist,.Die Temperaturerfassungsvorrichtung ist insbesondere als Thermoelement oder als optisches Temperaturmesssystem zur direkten Erfassung der Temperatur des Dentalrestaurationsteils ausgebildet. Der Dentalofen ist mit einer Prozesskontrollvorrichtung ausgebildet, die mit der Temperaturerfassungsvorrichtung und mit der Leistungssteuervorrichtung zur Regelung der Leistungssteuervorrichtung verbunden ist.

Unter "Dentalofen" seien hier sämtliche Vorrichtungen, welche zur Wärmebehandlung von Dentalmaterialien eingesetzt werden können, zu verstehen. Hierzu gehören Wärmebehandlungsprozesse wie das Brennen und Sintern von dentalen Keramikenund dentale Pressvorrichtungen (Pressöfen), einschließlich der Vorwärmung von Pressmuffeln, oder auch Entbinderungsvorrichtungen und sogar auch dentale Heisspolymerisationsgeräte.

Dentalöfen werden einerseits als Brennöfen, andererseits als Pressöfen in weitem Umfang eingesetzt, um aus einer Dentalkeramik bestehende Dentalrestaurationsteile in die gewünschte Form zu bringen bzw. zu brennen. Voraussetzung für ein gutes Brennergebnis ist es, dass das vom Hersteller vorgeschriebene Temperaturprofil, die sogenannte Brennkurve, genau eingehalten wird.

Hierzu werden typischerweise in Dentalofen hochwertige Thermoelemente eingesetzt, die vorab kalibriert werden und die den Temperaturverlauf an der Messstelle mit einer Genauigkeit von einigen Grad und sogar einigen Zehntel Grad erfassen.

Gegenüber der Genauigkeit eines solchen Thermoelements fällt die räumliche Einhaltung der Temperatur deutlich ab. So sind typischerweise innerhalb von Heizräumen die Temperaturgradienten mehrere 10 °C oder sogar über 100 °C groß.

Beim schnellen Aufheizen können sogar Temperaturunterschiede von mehr als 200 °C entstehen.

Dies gilt insbesondere auch für Pressöfen, denn die im Pressofen verwendete Muffel hat im Vergleich mit dem einzelnen Dentalrestaurationsteilen eine erheblich höhere Wärmekapazität, so dass sie sich langsamer aufheizt. Die vom Thermoelement gemessene Temperatur an der Oberfläche der Muffel mag dann zum Beispiel 800 °C betragen, während der Rohling in der Muffel beispielsweise erst 400 °C warm ist.

Solchen Messfehlern wird durch recht komplizierte Vorgaben für die Brennkurven der Hersteller Rechnung getragen, die dann auch noch von der Muffelgrö-ße abhängen, so dass ein Brand mit einer 300g-Muffel deutlich anders verläuft als mit einer 100g-Muffel.

Insofern hat die Verwendung eines teuren Thermoelements für die Temperaturerfassung den Nachteil, dass trotz der hohen Eigen-Messgenauigkeit die Temperatur an der relevanten Stelle, also am Brenngut, nicht exakt erfasst werden kann.

Ferner ist es an sich bereits vorgeschlagen worden, die Temperaturmessung über den Widerstandswert des metallischen Heizdrahts vorzunehmen. Typischerweise nimmt der Widerstand eines Heizdrahts mit der Temperatur zu.

Die DE 914 953 A beschreibt einen elektrischen Brennofen für ein Dentalrestaurationsteil mit einem widerstandsbeheizten Brennraum, der bei Erreichen einer Bereitschaftstemperatur mittels einer Regelung konstant auf dieser Temperatur gehalten wird.

In einem Dentalofen ist es für die Qualität der im Ofen verarbeiteten Objekte entscheidend, dass der thermische Prozess, das heißt der zeitliche Verlauf der ins Objekt eingebrachten Energie kontrolliert und reproduziert werden kann. Die Prozesssteuerung erfolgt dabei in der Regel über ein oder mehrere im Ofen eingebaute Temperaturmesselemente. Bei Hochtemperaturöfen sind dies vorzugsweise Thermoelemente oder aber optische Temperaturerfassungseinrichtungen.

Aufgrund des zeitlichen Verlaufs der ins Objekt eingebrachten Energie stellt sich im Objekt abhängig von dessen Geometrie (Masse, etc.) und Materialeigenschaften (hauptsächlich Wärmeleitung) ein zeitlicher Verlauf einer Temperaturverteilung ein.

Die Temperatur im Objekt ist unter anderem entscheidend für die durch den Bearbeitungsschritt gewollten Veränderungen der Materialeigenschaften, wie beispielsweise Sinterung, Kristallisation, Entbinderung, Trocknung et cetera. Je besser der Temperaturverlauf im Objekt kontrolliert werden kann, desto besser kann der Bearbeitungsschritt kontrolliert werden und desto besser können demnach auch die resultierenden Objekteigenschaften wie Enddichte, Festigkeit, Farbe, Transluzenz, Form, Gefüge etc. kontrolliert werden.

Typischerweise wird die Energieeinbringung ins Objekt indirekt über einen oder mehrere Temperatursensoren in der Brenn-/Sinterkammer erfasst. Es wird mittels Thermoelementen die Temperatur an einem oder mehreren Orten in der Brennkammer oder mit der Temperatur in der Brennkammer korrelierenden Position gemessen. Von dieser Temperatur wird angenommen, dass sie mit der Temperatur am Objekt korreliert, welche wiederum mit der Energieeinbringung ins System korreliert.

Bei einem Dentalofen kann mindestens ein Wandabschnitt der Brennkammer geöffnet werden, um das Brenngut in die Brennkammer einzubringen. Es ist bekannt, einen Brennkammerkopf von oben zu öffnen, um ein Dentalrestaurationsteil von oben in die Brennkammer herunterzufahren und nach oben auf einem sogenannten "Presenter", also einem Präsentierteller, wieder aus der Brennkammer noch oben zu verfahren.

Das System ist auf den Betrieb bei geschlossener Brennkammer ausgelegt. Es gibt jedoch Prozessschritte, welche bei zumindest teilweise offener Brennkammer stattfinden (z.B. Vortrocknen bei nassen Restaurationen, Abkühlen). Bei diesen Prozessschritten kühlt die Umgebungsluft das Thermoelement, so dass die Information, welche durch das Thermoelement gewonnen werden kann, nicht mehr präzise ist.

Demgegenüber liegt der Erfindung die Aufgabe zugrunde, einen Dentalofen gemäß dem Oberbegriff von Anspruch 1 zu schaffen, der hinsichtlich eines reproduzierbaren, thermischen Prozess verbessert ist, ohne dass relevante Zusatzkosten entstehen.

Die Aufgabe wird durch Anspruch 1 gelöst. Vorteilhafte Weiterbildungen ergeben sich aus den Unteransprüchen.

Eerfindungsgemäß ist es vorgesehen, dass die Prozesskontrollvorrichtung des Dentalofens eine Stromsteuervorrichtung aufweist, mit welcher, insbesondere bei einem fehlendem Messsignal der Temperaturerfassungseinrichtung, die Leistungssteuervorrichtung steuerbar ist. Hierdurch ist es möglich, die Regelung der Leistungssteuerung bei thermischen Prozessen mit einer Stromsteuerung zu unterstützen oder alternativ zu realisieren, wenn kritische wärmebehandelnde Prozessschritte durchgeführt werden, bei welchen die Temperaturmessung über ein Thermoelement trotz dessen hoher Eigengenauigkeit nicht korrekt funktioniert.

Erfindungsgemäß ist eine präzise Temperatumessung möglich, auch wenn eine Temperaturüberwachung mittels Temperatursensoren nicht mehr oder nicht mehr präzise funktioniert.

Um eine Energieeinbringung ins System der Brennkammer unabhängig von einer temporär ohne korrektes Messsignal arbeitenden Regelung auszugestalten, ist die Stromsteuervorrichtung mit der Funktion ausgebildet, an die Leistungssteuervorrichtung Steuersignale zu übermitteln, so dass ein konstanter Strom zu einem bestimmten Zeitpunkt über eine definierte Zeit an das Heizelement abgegeben wird. Somit wird eine definierte Energie ins System der Brennkammer eingebracht. Es wird dabei angenommen, dass die Temperatur der Brennkammer mit der Temperatur am Objekt korreliert, welche wiederum mit der Energieeinbringung ins System korreliert.

Um reproduzierbare Ergebnisse in hoher Qualität nach oder bei Wärmebehandlungsprozessen mit Dentalrestaurationsteilen zu erzielen, weist die Stromsteuervorrichtung mindestens ein hinterlegtes Stromsteuerprofil auf, welches von der Stromsteuervorrichtung über einen Zeitablauf abfahrbar ist, so dass die Leistungssteuervorrichtung einen Strom gemäß dem Stromsteuerprofil über den Zeitablauf in das Heizelement einprägt.

Um die Qualität der Herstellung des Dentalrestaurationsteiles weiter zu verbessern, ist vorzugsweise ein bestimmtes Stromsteuerprofil aus unterschiedlichen Stromsteuerprofilen in Abhängigkeit von der erfassten Temperatur in der Brennkammer, die auch als Heizraum bezeichnet werden kann, und/oder von dem Werkstoff des Heizelements auswählbar. Somit kann die eingebrachte und die einzubringende Energie noch exakter gesteuert werden.

Gemäß einer weiterbildenden Ausführungsform ist die Temperaturerfassung "intelligent", kompakt und integriert ausgebildet. Bei dieser Ausführungsform ist es vorgesehen, dass die Temperaturerfassungsvorrichtung das Heizelement selbst umfasst und die Temperatur des Heizelements durch Ermittlung des Widerstands vom Heizelement oder hierzu gleichwirkende Parameter erfasst, insbesondere durch Messung des Stroms beim Anlegen einer Spannung oder Messen des Spannungsabfalls beim Durchfließen des Heizelements mit einem eingeprägten Strom.

Mit zunehmendem Alter des Dentalofens werden typischerweise Widerstände der Leistungssteuerung, auch solche, die sich außerhalb der Brennkammer befindet, größer. Somit entsteht außerhalb der Brennkammer ein höherer Spannungsabfall und in der Brennkammer wird über die Heizelemente im Vergleich weniger Wärme abgegeben.

Mittels der erfindungsgemäßen Stromsteuervorrichtung wird sichergestellt, dass die zu erzielenden Temperaturen erreicht werden, die z.B. für ein Vortrocknen notwendig sind, so dass die Restaurationsteile von einem feuchten Zustand in einen trockenen Zustand überführt werden. Widerstandsschwankungen im Verlauf des Strompfades der Leistungssteuervorrichtung spielen somit eine geringere Rolle für die Brennkammertemperatur resp. Vortrockentemperatur.

Erfindungsgemäß ist ein Verfahren zum Betrieb eines Dentalofens vorgesehen, insbesondere zur Vortrocknung von Dentalrestaurationsteilen oder zur Entbindung von Dentalrestaurationsteilen, mit einer Brennkammer und mindestens einem elektrischen Heizelement, das von einer Leistungssteuervorrichtung angesteuert wird, mit einer Temperaturerfassungsvorrichtung, mit welcher die Temperatur des Dentalrestaurationsteils direkt in der Brennkammer erfasst wird, mit einer Prozesskontrollvorrichtung, die mit der Temperaturerfassungsvorrichtung und mit der Leistungssteuervorrichtung verbunden ist und mit der die Leistungssteuervorrichtung geregelt wird.

Vorteilhafterweise weist die Prozesskontrollvorrichtung die Stromsteuervorrichtung auf, mit welcher, insbesondere bei einem fehlendem Messsignal der Temperaturerfassungseinrichtung, die Leistungssteuervorrichtung angesteuert wird. Somit kann beispielsweise eine definierte Wärmeenergie beim Vortrocknen, wenn die Brennkammer mindestens zum Teil geöffnet ist, oder beim Auftreten von exothermischen Prozessen im Ofen oder beim Abdampfen von Binde- und Lösungsmitteln oder beim Fluten der Brennkammer mit kalter Luft oder ähnlichen Verfahrensschritten, in die Brennkammer eingebracht werden, unabhängig von einer Temperaturregelung.

Damit der Wärmebehandlungsprozess kontrolliert und reproduzierbar durchführbar wird, wird vor Beginn des Vortrocknens von der Prozesskontrollvorrichtung geprüft, ob die Temperatur des Heizraums unterhalb einer von der Temperaturerfassungsvorrichtung erfassten Temperaturschwelle liegt. Im positiven Fall wird in der Prozesskontrollvorrichtung in einen Stromsteuerbetrieb geschaltet, so dass das Heizelement von der Stromsteuervorrichtung gesteuert wird.

In vorteilhafter Weiterbildung umfasst das erfindungsgemäße Verfahren den Schritt, dass, sobald ein ungewöhnlicher Anstieg der Temperatur im Heizraum von der Temperaturerfassungsvorrichtung erfasst und an die Prozesskontrollvorrichtung übermittelt wird, die Leistungssteuervorrichtung über die Stromsteuervorrichtung mit einem Stromsteuerprofil angesteuert wird, das exothermen Reaktionen entgegenwirkt. Insbesondere das Entbinden stellt eine exotherme Reaktion dar, die sich so erfindungsgemäß kompensieren bzw. kontrollieren lässt.

Somit kann ein Oszillieren der Temperatur, wie es üblicherweise beim Entbinden auftritt, reduziert werden. Das Oszillieren entsteht, falls Exothermie auftritt, die Heizung dadurch stoppt und die Heizung den Brennraum anschließend wieder aufheizt, sobald die Temperatur des Thermoelements unterhalb eines Sollwerts gefallen ist. Die Heizung stoppt darauf wieder, sobald erneut eine übertriebene Aufwärmung beispielsweise des Entbinderungs-Guts und starke Exothermie erfasst wird. Dieser oszillierende Stopp-Start-Betrieb kann erfindungsgemäß reduziert werden. Dieser Effekt ist insbesondere in kleinen Brennkammern, wie in der Dentalindustrie eingesetzt, problematisch.

Das Heizelement wird während des Wärmebehandlungsprozess des Dentalrestaurationsteils von der Prozesskontrollvorrichtung grundsätzlich in einem Regelbetrieb geregelt. Dies gilt auch bei Unterdruck in der Brennkammer. In vorteilhafter Ausgestaltung der Erfindung wird beim Einlassen kalter Luft in die Brennkammer in der Prozesskontrollvorrichtung in einen Stromsteuerbetrieb umgeschaltet, so dass das Heizelement von der Stromsteuervorrichtung gesteuert wird. Die Temperaturerfassungsvorrichtung liefert beim Einlassen kalter Luft keine verlässlichen Temperatur-Messwerte der. Deshalb sind die Ergebnisse von Wärmebehandlungsprozessen im Steuerbetrieb gemäß einem Stromsteuerprofil in solchen Fällen reproduzierbarer.

Um Dentalrestaurationsteile nach dem Wärmebehandlungsprozess zu schonen und noch nicht vorgetrocknete Dentalrestaurationsteile nicht durch zu schnelle Erwärmung zu schädigen, wird von der Prozesskontrollvorrichtung eine Wartezeit $t_{cool}$ ab dem Zeitpunkt begonnen, sobald die Wärmebehandlung durch Zufuhr elektrischer Energie gestoppt wird und die Brennkammer geöffnet wird und die Wartezeit $t_{cool}$ zu dem Zeitpunkt beendet wird, in dem die Temperatur des Heizraums unter einen vorgegebenen Wert, insbesondere 400 °C, gefallen ist.

Gemäß einem erfindungsgemäß bervorzugten Verfahren wird die Wartezeit $t_{cool}$ aus zumindest drei Parametern berechnet: der gesamten Wärmebehandlungszeit $t_{duration}$ des Dentalrestaurationsteils einschließlich einer Vortrocknungsphase und dem Wärmebehandlungsprozess, der maximal erreichten Temperatur $T_{max}$ und der erreichten Temperatur in einer Abkühlphase $T_{open}$ zum Zeitpunkt, wenn der Heizraum geöffnet wird, wobei die Temperatur von der Temperaturerfassungsvorrichtung erfasst wird. Die Wartezeit $t_{cool}$ zu berechnen ist wichtig, da nach dem Öffnen der Brennkammer die Temperatur nicht mehr genau oder gar nicht mehr messbar ist. Die Parameter werden im vorangegangenen Wärmebehandlungsprozess erfasst und für die darauf folgende Wartezeit $t_{cool}$ eingesetzt.

Ein besonders bevorzugtes Verfahren zeichnet sich dadurch aus, dass die Wartezeit $t_{cool}$ durch Bildung eines Polynoms, besonders bevorzugt eines Polynoms zweiter Ordnung, aus den Parametern berechnet wird, wobei ein maximaler Wert der Wartezeit, insbesondere auf etwa 35 min, festgesetzt ist, und dass der maximale Wert verwendet wird, wenn die Berechnung einen Wert über dem maximalen Wert ergibt. Es ergibt sich überraschenderweise, dass die Wartezeit $t_{cool}$ durch Bildung eines Polynoms ein präzises Rechenmodell darstellt, um die erwünschte Abkühlung des Brennraums zu berechnen.

Um Fertigungszyklen von Dentalrestaurationsteilen zu verkürzen und somit die Fertigungskapazität zu erhöhen, wird weiter bevorzugt keine Wartezeit berechnet, wenn ein Wärmebehandlungsprozess, insbesondere während der ersten 20 sec, nach Start einer Vortrocknungsphase abgebrochen wird.

Weiter bevorzugt ist der Stromsteuerbetrieb bei geschlossenem, teilweise oder komplett geöffneten Dentalofen (oder unabhängig von der Position der Kopföffnung des Dentalofens) verwendbar. Somit können mögliche Störungen in der Temperaturerfassung, in welcher eine Regelung ggf. gestört ist, insbesondere auch für kurze Zeitspannen, sicher überbrückt werden.

Um nasse Dentalrestaurationsteile langsam an die Temperatur zum Vortrocknen heranzuführen und eine Beschädigung dieser zu vermeiden, wird der Heizraum vor dem Vortrocknen unter eine definierte Temperaturschwelle abgekühlt, insbesondere auf etwa 400 °C, und der Heizraum beim Vortrocknen teilweise geschlossen. Das teilweise Verschließen hat mehrere Vorteile, beispielsweise, dass Feuchtigkeit leicht aus dem Heizraum entweichen kann.

Weitere Vorteile, Einzelheiten und Merkmale ergeben sich aus der nachfolgenden Beschreibung mehrerer Ausführungsformen der Erfindung anhand der Zeichnungen. Es zeigen:

Fig. 1     einen schematischen Dentalofen mit offenem Ofenkopf in einer ersten erfindungsgemäßen Ausführungsform;
Fig. 2     einen Ausschnitt eines Querschnitts einer Brennkammer des Dentalofens gem. Fig. 1;

Fig. 3    einen schematischen Schaltplan des Dentalofens gem. Fig. 1;

Fig. 4    ein Flussdiagramm eines Verfahrens zum Betrieb des Dentalofens;

Fig. 5    ein Zeit-Temperatur-Diagramm eines erfingsungsgemäßen Verfahrens zum Betrieb des Dentalofens;

Fig. 6    ein Zeit-Strom-Diagramm eines Heizelements,

Fig. 7    eine erste Abkühlvariante;

Fig. 8    eine zweite Abkühlvariante;

Fig. 9    eine dritte Abkühlvariante;

Fig. 10    eine vierte Abkühlvariante;

Fig. 11    eine fünfte Abkühlvariante;

Fig. 12    eine sechste Abkühlvariante;

Fig. 13    ein Messwert-Abschätzungswert-Diagramm zum Abkühlen des Dentalofens; und

Fig. 14    eine Tabelle mit Gegenüberstellungen der gemessenen, abgeschätzten und in einer Nachschlagetabelle hinterlegten Abkühlzeit bei verschiedenen Prozessbedingungen.

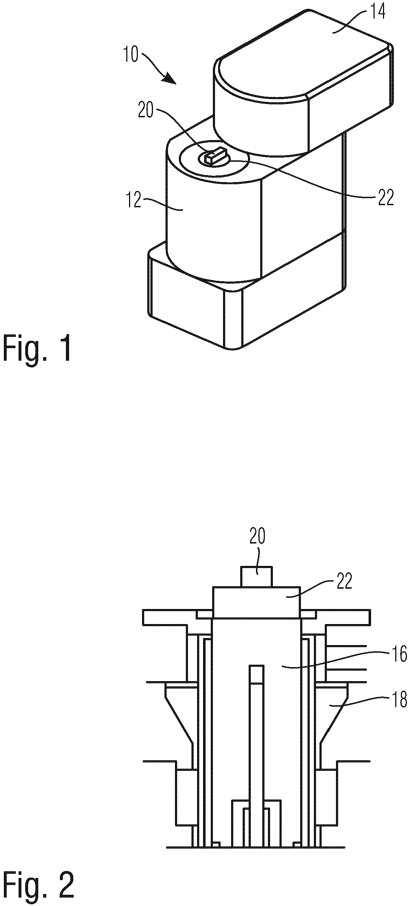

Fig.1 zeigt schematisch einen Dentalofen 10 mit einen Ofenkopf 12 und einer Abdeckung 14, die relativ zum Ofenkopf 12 beweglich ist.

Im Ofenkopf 12 ist eine Brennkammer 16 mit mindestens einem Heizelement 18 ausgebildet. Innerhalb der Brennkammer 16 ist eine Aufnahmeplatte 22 in der Höhe vertikal verfahrbar. Auf der Aufnahmeplatte 22 wird ein Dentalrestaurationsteil 20 angeordnet, um dieses einer Wärmebehandlung zu unterziehen.

Fig. 1 zeigt die Abdeckung 14 nach hinten maximal geöffnet und die Aufnahmeplatte 22 mit einem Dentalrestaurationsteil 20 nach oben gefahren. In dieser Position lässt sich die Aufnahmeplatte 22 mit dem Dentalrestaurationsteil 20 sehr leicht bestücken.

Fig. 2 zeigt im Querschnitt einen Ausschnitt des Dentalofens 10 mit dem Heizraum 16 und angrenzend benachbarten Heizelementen 18 gemäß der Fig. 1, also einer nach oben gefahrenen Aufnahmeplatte 22 mit einem Dentalrestaurationsteil 20.

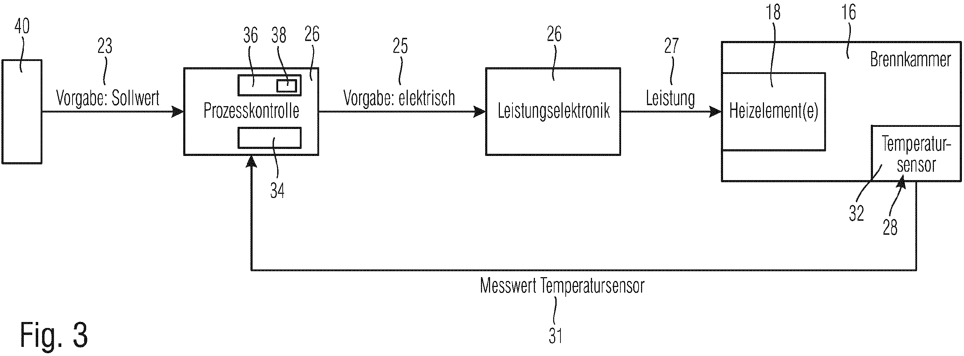

Fig. 3 zeigt abstrahiert ein Schema eines Schaltplans des erfindungsgemäßen Dentalofens 10. Der Dentalofen 10 umfasst eine übergeordnete Ofensteuerung 40, eine Prozesskontrollvorrichtung 24, eine Leistungssteuervorrichtung 26 und eine Temperaturerfassungsvorrichtung 28.

Die Leistungssteuervorrichtung 26 ist als Leistungselektronik ausgebildet und gibt eine Leistung 27 an Heizelemente 18 in der Brennkammer 16 ab. Die Brennkammer 16 kann auch als Heizraum bezeichnet werden.

Die Temperaturerfassungsvorrichtung 28 erfasst die Temperatur im Heizraum auf verschiedene Weise. Es ist ein Temperatursensor als Thermoelement 32 oder als optisches Temperaturmesssystem zur direkten Erfassung der Temperatur des Dentalrestaurationsteils 20 vorgesehen. Ferner ist auch eine sogenannte intelligente Temperaturerfassung erfindungsgemäß realisiert. Die Temperaturerfassungsvorrichtung 28 umfasst hierfür das Heizelement 18 und eine Auswerteelektronik, die in der Leistungssteuerung integriert sein kann. Die Temperaturerfassungsvorrichtung 28 erfasst die Temperatur des Heizelements 18 durch Ermittlung des Widerstands des Heizelements 18 oder hierzu gleichwirkender Parameter, insbesondere durch Messung des Stroms beim Anlegen einer Spannung oder Messen des Spannungsabfalls beim Durchfließen des Heizelements mit Strom.

Die übergeordnete Ofensteuerung 40 weist verschiedene, abgespeicherte Wärmebehandlungsprogramme für das Dentalrestaurationsteil 20 auf. Vom Anwender wird in einem Initialisierungsschritt ein spezielles Wärmebehandlungsprogramm ausgewählt.

Die übergeordnete Ofensteuerung 40 gibt einen Sollwert 23 an die Prozesskontrollvorrichtung 24 vor. Die Prozesskontrollvorrichtung wandelt diesen Sollwert 23 in ein elektrisches Vorgabe-Steuersignal 25 und gibt diesen an die Leistungssteuervorrichtung 26 weiter, die auf das mindestens eine Heizelement 18 wirkt. Die Temperaturerfassungsvorrichtung 28 erfasst mittels des Temperatursensors 32 die Temperatur in dem Heizraum 16. Es wird davon ausgegangen, dass die erfasste Temperatur in dem Heizraum 16 der Temperatur des Dentalrestaurationsteils 20 entspricht. Der Temperatursensor 32 gibt einen Messwert 31 an die Prozesskontrollvorrichtung 24 weiter, sodass in einer Regelvorrichtung 34 ein Regelbetrieb bezüglich eines vorgegebenen Programmablaufs kontinuierlich stattfindet.

Die Prozesskontrollvorrichtung 24 weist gemäß einer erfindungsgemäßen Ausgestaltung eine Stromsteuervorrichtung 36 auf, mit welcher bei einem fehlenden, oder ggf. einem fehlerhaften, Messsignal der Temperaturerfassungsvorrichtung 28 die Leistungssteuervorrichtung 26 mittels des elektrischen Vorgabe-Steuersignals 25 ansteuerbar ist. Das fehlende Messsignal kann sich dadurch ergeben, dass die Temperatur aufgrund bestimmter Umstände nicht richtig oder nicht erfasst werden kann, beispielsweise, weil kalte Luft in den Heizraum einströmt oder weil das Heizelement gealtert ist.

Beim Vortrocknen ist der Heizraum mindestens zum Teil geöffnet. Bei diesem Prozessschritt befindet sich das Thermoelement nicht in der üblichen Position relativ zum Objekt, dem Dentalrestaurationsteil, und die Korrelation zwischen Temperatur von Thermoelement und Objekt ist nicht mehr gegeben. Auch beim Auftreten von exothermischen Prozessen im Ofen, z.B. beim Entbindern und/ oder Verbrennen von Restorganik, beim Abdampfen von Binde- und Lösemitteln und bei ähnlichen Prozessen oder Prozessschritten ist die Temperaturüberwachung mittels Temperatursensoren mit mehr möglich oder nicht präzise genug.

Die Stromsteuervorrichtung 36 ist mit der Funktion ausgebildet, an die Leistungssteuervorrichtung 26 Steuersignale 25 zu übermitteln, so dass ein konstanter Strom zu einem bestimmten Zeitpunkt über definierte Zeit an das Heizelement 18 abgegeben wird.

Die Stromsteuervorrichtung 36 umfasst verschiedene Stromsteuerprofile 38, die in Abhängigkeit von Temperaturmesswerten 31 von der Temperaturerfassungsvorrichtung 28 ausgewählt werden, oder in Abhängigkeit vom gewählten Wärmebehandlungsprozess oder von einem vorgegebenen Werkstoff des Dentalrestaurationsteils 20. Die hinterlegten Stromsteuerprofile 38 sind über einen Zeitablauf abfahrbar, so dass die Leistungssteuervorrichtung 26 einen Strom gemäß dem Stromsteuerprofil 38 über den Zeitablauf in das Heizelement 18 einprägt.

Es versteht sich, dass die Stromsteuervorrichtung 36 und/oder die Prozesskontrollvorrichtung 24 auch als ein Teil der Ofensteuerung 40 ausgebildet sein kann.

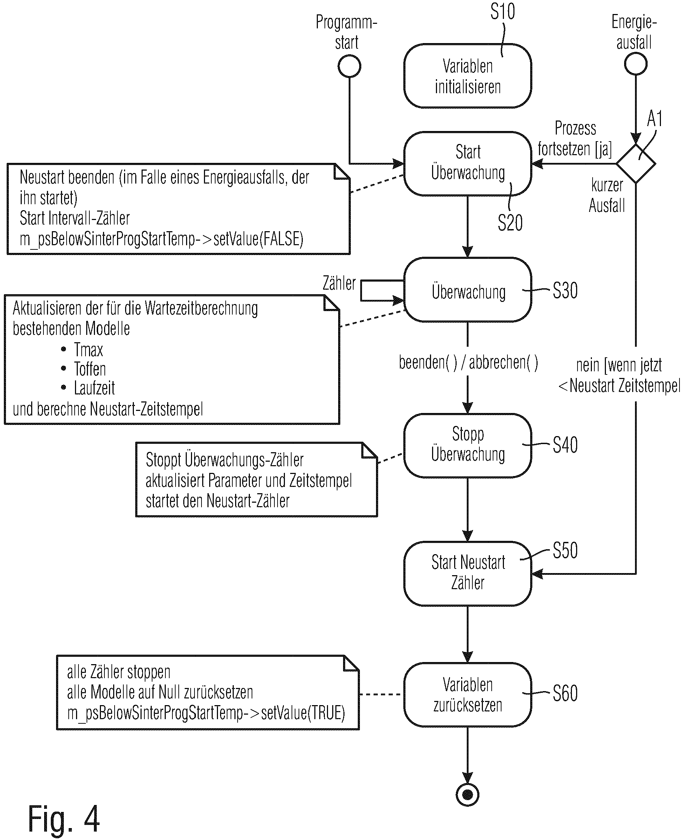

Fig. 4 zeigt ein Flussdiagramm eines erfindungsgemäßen Verfahrens zum Betrieb des Dentalofens 10. Zur Vorbereitung eines Wärmebehandlungsverfahrens wird das Dentalrestaurationsteil 20 auf der Aufnahmeplatte 22 angeordnet. Die Aufnahmeplatte 22 fährt vertikal nach unten in den Heizraum 16. Die Abdeckung 14 wird dann teilweise für eine Vortrocknung geschlossen.

Aufgrund des teilweise offenen Heizraums 16 sind die Messwerte der Temperaturerfassungsvorrichtung 28 ungenau.

In einem ersten Schritt S10 werden Variablen initialisiert. Die Variablen können der Werkstoff, die Größe, das ungefähre Volumen, das Gewicht des Dentalrestaurationsteils sein und/oder die Art der Wärmebehandlung, die durch eine Programmauswahl bestimmt wird. Feuchte Dentalrestaurationsteile können kristallisiert, glasiert oder gesintert werden. Sie müssen jedoch zuvor getrocknet werden. Dazu wird das feuchte Dentalrestaurationsteil bei einem halboffenen Ofenkopf erwärmt und die Feuchtigkeit wird an die Umgebung abgegeben.

Damit das Vortrocknen wie gewünscht funktioniert, muss die Umgebung und damit die Restauration definiert erwärmt werden. Sind Temperaturgradienten an den Dentalrestautrationsteilen im noch feuchten Zustand zu groß, können durch die Dampfbildung Risse in den Objekten oder Defekte auf den Oberflächen oder gar im Bauteil selbst entstehen.

In einem zweiten Schritt S20 wird das in Schritt S1 ausgewählte Programm gestartet. Die Ofensteuerung 40 steuert die Prozesskontrollvorrichtung 24 an, das Heizelement in einer ersten Betriebsphase des Vortrocknens in einem Steuerbetrieb, d.h. ohne Regelung auf bestimmte Temperaturwerte, mit Strom zu versorgen. In dieser Betriebsphase kann die Temperaturerfassung durch das Thermoelement aufgrund verschiedener Einflüsse nicht korrekt sein: Daher wird ein Steuerbetrieb mit einer Stromsteuervorrichtung für das Heizelement durchgeführt. In der Betriebsphase des Vortrocknens schließt die Abdeckung 14 den Heizraum 16 nicht vollständig ab, so dass durch das Thermoelement gemesseene Temperaturwerte nicht korrekt sind.

Ferner ist eine Regelung der Leistung in dem Heizraum beim Vortrocknen über die Widerstände des Heizelements mit zunehmender Alterung d.h. bei über 1000 Betriebsstunden und mehr ggf. nicht mehr genau genug. Widerstände der Anschlusstechnik des Dentalofens 10, die außerhalb des Heizraums angeordnet sind, werden mit zunehmendem Alter größer. Somit entsteht ein Spannungsabfall zunehmend außerhalb des Heizraums über der Anschlusstechnik und weniger in dem Heizraum über dem Heizelement, mit entsprechenden Folgen für die Wärmeabgabe. Die Folge ist, dass die notwendigen Temperaturen für das Vortrocknen im Heizraum nicht erreicht werden oder zu kurz sind und die Dentalrestaurationsteile feucht bleiben.

Durch ein Umstellen auf einen Stromsteuerbetrieb mit einer Stromsteuerung beim Vortrocknen spielen Widerstandsveränderungen und -schwankungen an der Anschlusstechnik keine Rolle mehr.

Gleichzeitig überprüft im zweiten Schritt S20 eine Abfrage A1, ob ein Abbruch des Programms durch einen Stopp der Energieversorgung erfolgt ist oder nicht. Wird ein Abbruch innerhalb einer definierten Programmlaufzeit festgestellt, beispielsweise während der ersten 20 Sekunden, so wird ein Zähler der Abkühlzeit gestoppt und ein Intervallzähler wird wieder beim Programmstart von null gestartet. Erfolgt ein Abbruch später, so wird ein Zähler für die Abkühlzeit d.h. ein Zähler, wann wieder ein Wärmebehandlungsprozess erneut durchgeführt werden kann, gestartet.

In einem dritten Schritt S30, der zusammen mit dem zweiten Schritt S20 beginnt, wird ein Zähler gestartet, der die Zeitdauer $t_{duration}$ vom Programmstart misst, wenn der Startknopf am Dentalofen 10 gedrückt wird, bis zu dem Zeitpunkt, an welchem der Dentalkopf 12 mittels der Abdeckung 14 zur Abkühlung geöffnet wird. Um eine Abkühlzeit hochgenau zu berechnen, werden im Schritt S30 zwei weitere Parameter erfasst, die maximal erreichte Temperatur OT1 im Programm von dem Programmstart bis zum Programmende und die Temperatur $T_{open}$. Die Temperatur $T_{open}$ ist die Temperatur OT1 des Dentalofens 10 bis vor dem Öffnen des Heizraums d.h. der Brennkammer.

Die Prozesskontrollvorrichtung 24 regelt die Leistungssteuerung 26 aufgrund von Temperaturwerten, sobald der Heizraum 16 von der Abdeckung 14 verschlossen ist und solange bis in einem vierten Schritt S40 die Abdeckung 14 wieder den Heizraum 16 nach der Wärmebehandlung für eine Abkühlung und einen Neustart zur Wärmebehandlung eines neuen Dentalrestaurationsteils öffnet.

Im vierten Schritt S40 wird damit der Zähler der Zeitdauer $t_{duration}$ gestoppt und die oben beschriebenen Parameterwerte festgelegt und damit die Zeitdauer für die Abkühlzeit bestimmt bzw. errechnet.

Im fünften Schritt S50 startet der Zähler der Abkühlzeit und es läuft die Zeitdauer $t_{cool}$ ab.

Anschließend werden im sechsten Schritt S60, die im ersten Schritt S10 gesetzten Variablen für einen neuen Behandlungsvorgang wieder auf Anfangswerte oder null gesetzt und alle Zähler auf null gesetzt.

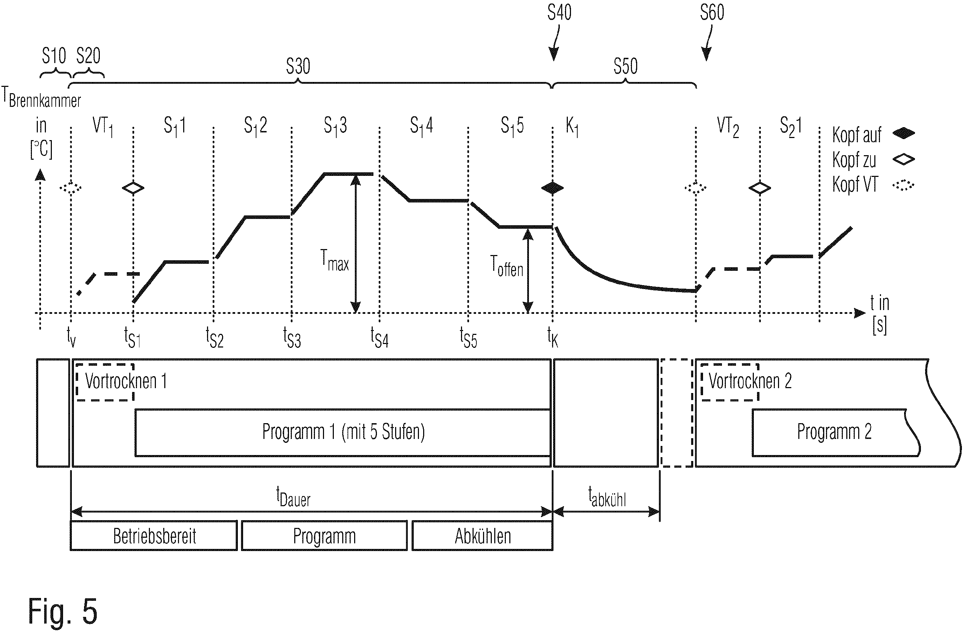

Fig. 5 zeigt ein Zeit t -Temperatur T-Diagramm zu einem in der Fig. 4 beschriebenen Ablauf des Betriebsverfahrens eines Wärmebehandlungsprozesses im Dentalofen 10. Zur Vereinfachung sind die vorgenannten Verfahrensschritte S10 bis S60 aus der Fig. 4 in Fig. 5 eingezeichnet.

In einem ersten Schritt wird das Dentalrestaurationsteil 20 auf der Aufnahmeplatte 22 angeordnet und die Aufnahmeplatte 22 fährt vertikal nach unten in den Heizraum 16. Die Abdeckung 14 wird danach teilweise für eine Vortrocknung geschlossen.

Aufgrund des teilweise offenen Heizraums 16 sind Messwerte der Temperaturerfassungsvorrichtung 28 ungenau. In einem zweiten Schritt des Vortrocknens wird deshalb von der Prozesskontrollvorrichtung 24 die Stromsteuervorrichtung 36 dahingehend angesteuert, eine Leistung an die Heizelemente 18 gemäß vordefinierten Stromsteuerprofilen 38 abzugeben.

Der Zähler der Zeitdauer $t_{duration}$ fängt beim Drücken des Startknopfs zur Zeitmessung an. Dabei ist der Ofenkopf 12 teilweise geöffnet. Die Temperatur befindet sich auf einem niedrigen Niveau $T_{VT-1}$ zum Vortrocknen des Dentalrestaurationsteils. In diesem Abschnitt wird das Heizelement 18 mit der Stromsteuervorrichtung 36 von der Prozesskontrollvorrichtung 24 gesteuert. Nach einer definierten Zeit ist der Vortrocknungsvorgang abgeschlossen und der Ofenkopf 12 wird vollständig geschlossen. Die Prozesskontrollvorrichtung 24 schaltet dann auf einen Regelbetrieb mit der Regelvorrichtung 34 um. Dabei wird in fünf verschiedenen Stufen die Temperatur im Heizraum 16 erhöht und abgesenkt, wobei ein Temperaturniveau temporär für eine vorbestimmte Zeit gemäß dem vorausgewählten Programm gehalten wird. Das Temperaturniveau wird mittels der Temperaturerfassungsvorrichtung 28, wie zur Fig. 3 beschrieben worden ist, geregelt.

In den ersten drei Stufen wird das Temperaturniveau erhöht und in den nachfolgenden zwei Stufen wird das Temperaturniveau langsam stufenweise abgesenkt. In der dritten Stufe zum Zeitpunkt $t_{S4}$ wird die maximale Temperatur gemessen und als Parameter $T_{max}$ festgehalten, um daraus die Abkühlzeit $t_{cool}$ abzuschätzen. Im Zeitpunkt $t_K$ wird die Öffnungstemperatur $T_{open}$ des Heizraums 16 gemessen und als zweiter Parameter gespeichert. Als dritter Parameter wird die gesamte Programmlaufdauer $t_{duration}$ gemessen, der Ofenkopf 12 wird vollständig mit der Abdeckung 14 geöffnet und die Abkühlzeit $t_{cool}$ abgeschätzt bzw. berechnet, wie dies unten noch erläutert und beschrieben wird.

Nach Ablauf der Abkühlzeit $t_{cool}$ fährt die Aufnahmeplatte nach oben und gibt das Dentalrestaurationsteil 20 frei. Nun kann ein weiteres Dentalrestaurationsteil 20 in einem zweiten Verfahren nach einem zweiten Programm einem Wärmebehandlungsprozess zugeführt werden. Dies ist mit "Vortrocknen 2" und "Programm 2" in Fig. 5 angedeutet.

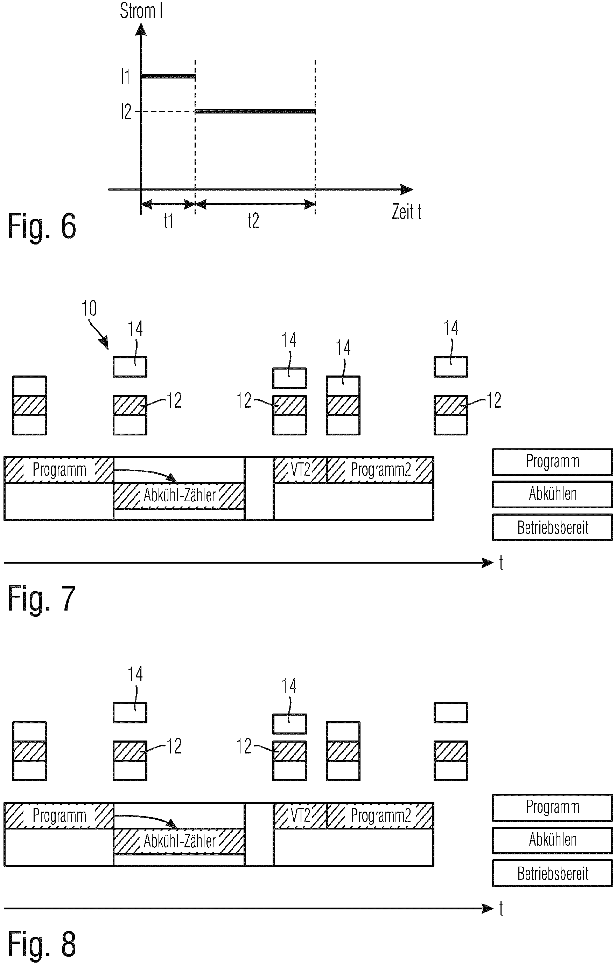

Fig. 6 zeigt ein abstrahiertes Zeit t-Strom I-Diagramm für ein Heizelement 18. Dieses Diagramm dient als Beispiel für verschiedene Heizelemente 18. Im Verfahrensschritt der Vortrocknung für ein stromgesteuertes Vortrocknen, das beispielsweise für drei verschiedene VortrocknungsProgramme angewendet werden könnte ist allen Programmen gleich, dass eine kurze Zeit t1 ein großer Strom I1 eingeprägt wird und darauffolgend eine längere Zeit t2 ein kleiner Strom I2 eingeprägt wird. Die Programme unterscheiden sich abhängig vom Werkstoff der Heizelemente 18 und von dem darauffolgenden Wärmebehandlungsverfahren, beispielsweise Kristallisieren, Glasieren und/oder Sintern oder ähnlichen Verfahren.

Die folgenden Figuren zeigen schematische Diagramme mit einer Y-Achse als Öffnungsposition des Ofenkopfs 12 in Relation zur Abdeckung 14 und den drei Modi Programmzeit, Abkühlzeit und Betriebsbereitschaft über eine Laufzeit t als X-Achse.

Fig. 7 zeigt einen ersten, grundsätzlichen Programmablauf bezüglich der üblichen Abkühlzeit des Dentalofens 10. Die Dauer der Abkühlzeit $t_{cool}$ wird durch eine Abschätzung aus den Programmparametern der Programmlaufzeit inklusive der Zeit des Vortrocknens $t_{duration}$, $T_{MAX}$ und $T_{Open}$ bestimmt.

Die folgenden Figuren zeigen Varianten zum Prozessabschnitt des Abkühlens.

Fig. 8 zeigt einen Programmabbruch in einer der in Fig. 5 gezeigten fünf Stufen. Es wird dann eine Abkühlzeit $t_{cool}$ aus den drei während des Programms ermittelten Parametern $t_{duration}$, $T_{max}$ und $T_{open}$ ermittelt. Vor Ablauf der Abkühlzeit $t_{cool}$, die durch eine Zeitschaltuhr realisiert ist, kann kein neues Programm2 zur Wärmebehandlung gestartet werden.

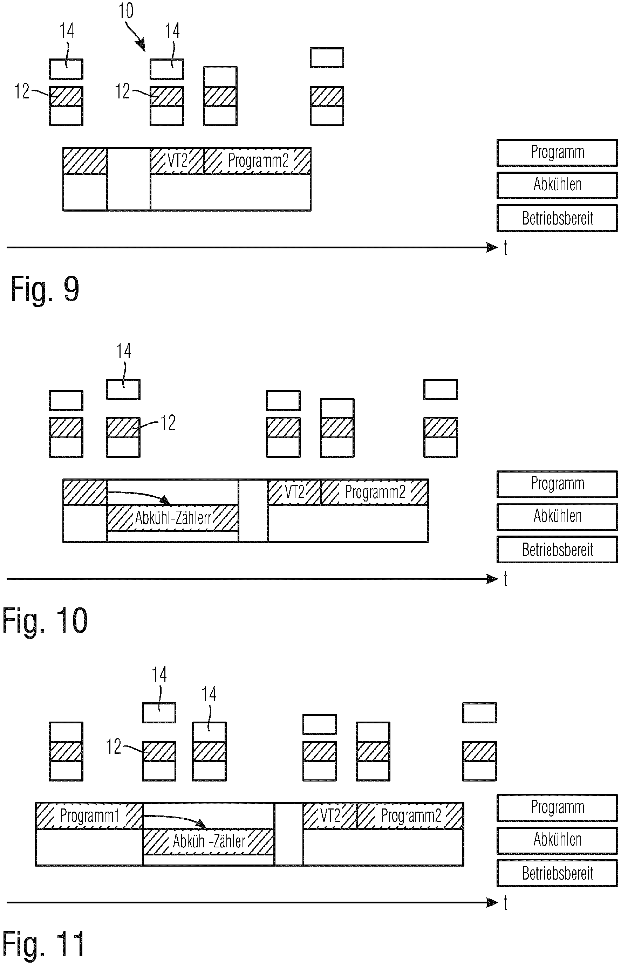

Fig. 9 zeigt die Variante, wenn innerhalb der ersten 20 Sekunden des Vortrocknens abgebrochen wird. Dannist keine Wartezeit für ein Abkühlen notwendig. Es kann sofort neu mit dem Vortrocknen und dem folgenden Wärmebehandlungsprogramm begonnen werden.

Fig. 10 zeigt eine Variante, wenn ein Programm während des vorangehenden abgebrochen wird: Es wird nur der Parameter $t_{duration}$ erfasst. Die Temperaturen $T_{max}$ und $T_{open}$ sind nicht bekannt und werden als 700 °C (maximale Haltetemperatur) angenommen. Aus diesen Parametern kann nun die Abkühlzeit für die Zeitschaltuhr bestimmt werden. Vor Ablauf der Abkühlzeit kann kein neues Programm gestartet werden.

Fig. 11 zeigt eine weitere Variante, wenn der Ofenkopf 12 während des Abkühlens geschlossen wird. Es wird dann ein Neustart eines neuen Programms ab einer OT1 Temperatur kleiner 400 °C erlaubt. Die OT1-Temperatur wird erst 120 Sekunden nach dem Schließen gemessen. Die Abkühlzeit der Zeitschaltuhr wird dabei nicht mehr berücksichtigt.

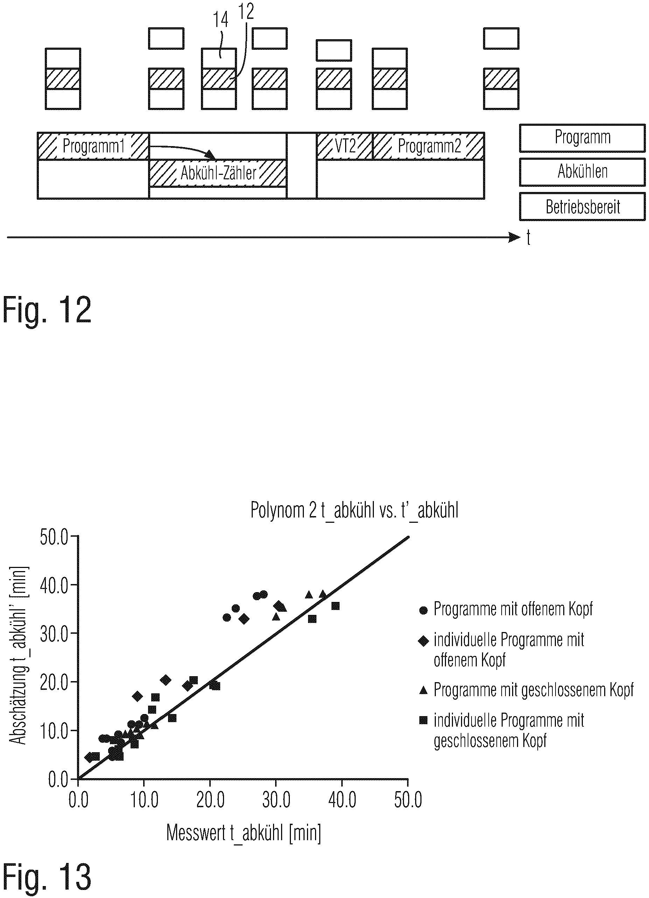

Fig. 12 zeigt eine weitere Variante. Wenn der Ofenkopf 12 während des Abkühlens geschlossen und wieder geöffnet wird, so wird ein Neustart nach Ablauf der von der Zeitschaltuhr gemessenen Abkühlzeit erlaubt.

Fig. 13 zeigt ein Messwert-Abschätzungswert-Diagramm bezüglich der Abkühlzeit $t_{cool}$ zum Abkühlen des Dentalofens. Aus Korrelationsanalysen ist überraschenderweise herausgefunden worden, dass oben beschriebene, folgende drei Variablen als Parameter aus Programmen für die Bestimmung der nötigen Abkühlzeit des Heizraums, d.h. der Brennkammer, nach Programmende sehr aussagekräftig sind:

$T_{max}$ = maximale Temperatur des Programms

$T_{open}$ = letzte Temperatur der Brennkammer, bevor Kopf öffnet und

$t_{duration}$ = Dauer des Programms inkl. Vortrocknung

Zu $t_{duration}$: Wird kein Vortrocknen durchgeführt, besteht die Programmlaufzeit $t_{du\text{-}ration}$ nur aus der Zeit für die Sinterung / Glasur / Kristallisation. Bei der Analyse der Messdaten ergibt sich eine sehr große Korrelation von über 99.7% von der Beziehung '$t_{duration}$*a3 + $T_{max}$*a1+$T_{open}$*a2+ b'

Zur Abkühlzeit '$t_{cool}$' : es ergibt sich eine sehr große Korrelation von über 99.7% > Korr (tcool, f(tduration ,Tmax, Topen)

Dies deutet darauf hin, dass es möglich ist, die Abkühlzeit aus der empirisch ermittelten Formel abzuschätzen. Die Koeffizienten a1, a2, a3 und b wurden durch eine Regression ermittelt.

$$t'_{cool} = a1 * t_{duration} + a2 * T_{max} + a3 * T_{open} + b$$

Noch bessere Resultate wurden überraschenderweise mit dem Polynom 2ter Ordnung erzielt. Diese Werte zeigt die Fig. 13.

$$t'_{cool} = a11 * t_{duration}^2 + a10 * t_{duration} + a21 * T_{max}^2 + a20 * T_{max} + a31 * T_{open}^2 + a30 * T_{open} + b$$

Es wurde somit überraschenderweise ein Polynom gefunden, das die Abkühlzeit auf der Basis von insgesamt, 27 Programmen abschätzt. Dies wurde mit 11 Standardprogrammen und 16 Individuelle Programmen verifiziert.

Dabei wurde eine möglichst geringe quadratische Fehlersumme ($t'_{cool}$ - $t_{cool}$) Abschätzung - Messwert ermittelt. Die maximale quadratische Schätzung der Abkühlzeit < 25, wenn ($t'_{cool}$- $t_{cool}$) negativ ist, soll quadratisch aufaddiert werden.

Die Abkühlzeitschätzung hat folgende Gültigkeiten:

Die Gültigkeit des Polynoms ist in folgendem Raum gegeben

$$0 < t_{duration} < 70\ min$$

t < 0 min, nicht möglich

$t_{duration}$ > 70 min, für Abschätzung $t_{duration}$ = 70 min angenommen

$$400\ °C < T_{max} <= 1560\ °C$$

$T_{max}$ < 400 °C → kein Abkühlen nötig

$T_{max}$ > 1560 °C → Ofen defekt

$$400\ °C < T_{open} <= 1200\ °C$$

$T_{open} < 400\ °C \rightarrow$ kein Abkühlen nötig

$T_{open} > 1200\ °C \rightarrow$ Ofen defekt

Bei der Abkühlzeitschätzung bezüglich des Polynoms 2ter Ordnung ist aus der Fig. 13 ersichtlich, dass bei allen Programmen die Abschätzung der Abkühlzeit grösser als die gemessene Abkühlzeit ist.

Die geschätzten Abkühlzeiten einiger individuellen Programme bei geschlossenem Ofenkopf sind tendenziell etwas zu kurz, jedoch vertretbar nahe an der Anforderung (max. 3 min unterschätzt,dies entspricht ca. $\Delta T_{OT1}$=30 °C)

Im Schnitt wird ein um 5 bis 10% längeres Abkühlen als nötig bei geschlossenem Ofenkopf berechnet. Im Schnitt bedeutet dies ca. 2 min, d.h. 25-30% längeres Abkühlen als nötig bei offenem Ofenkopf. Bei kurzen Programmen ergibt sich kaum eine Überschätzung der Abkühlzeit.

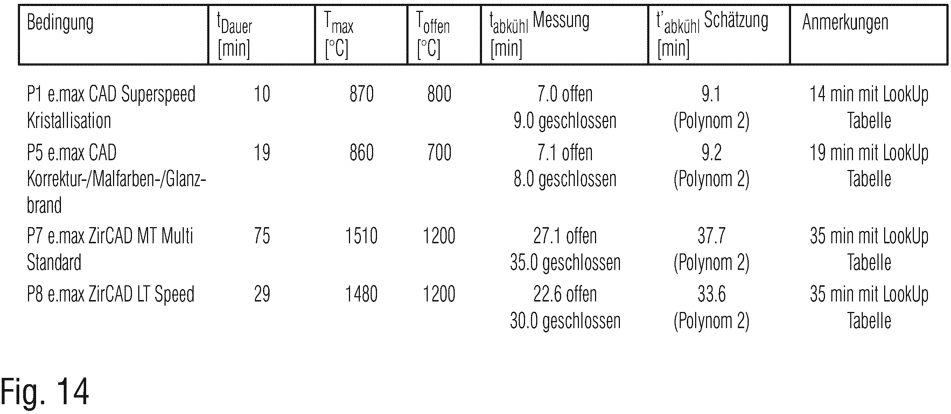

Fig. 14 zeigt eine Tabelle mit Gegenüberstellungen der gemessenen, abgeschätzten und in einer Nachschlagetabelle hinterlegten Abkühlzeit bei verschiedenen Prozessbedingungen. Die Nachschlagetabelle umfasst Werte, die aus Szenarien im extremsten Fall ermittelt wurden. Sie sind also äußerst konservativ.

Die Schätzung über die Formel führt zu einer deutlich besseren Abkühlzeitabschätzung als die ursprüngliche Variante mit einer Nachschlage-(Look-Up) Tabelle.

Zusammenfassend ist somit festzustellen, dass eine einwandfreie Sinterung mit den Objekten im extremsten Fall, d.h. Worst Objekten, einem sogenannten Igel und Ellipsoid, nach Kaltstart möglich ist.

Eine einwandfreie Sinterung mit Objekten im extremsten Fall, d.h. Igel und Ellipsoid, nach 35 Minuten Abkühlung nach Grenzprofil ist mit geschlossenem Ofenkopf realisierbar. Die Formel mit einem Polynom 2ter Ordnung ergibt zuverlässige Resultate für die Abschätzung der Abkühlzeit.

**Patentansprüche**

1. Dentalofen, insbesondere zur Vortrocknung von Dentalrestaurationsteilen oder zur Entbinderung von Dentalrestaurationsteilen,

   - mit einem Heizraum und mindestens einem elektrischen Heizelement,
   - einer Leistungssteuervorrichtung für das Heizelement,
   - einer Temperaturerfassungsvorrichtung, mit welcher die Temperatur im Heizraum erfassbar ist, wobei die Temperaturerfassungsvorrichtung insbesondere als Thermoelement oder als optisches Temperaturmesssystem zur direkten Erfassung der Temperatur des Dentalrestaurationsteils ausgebildet ist,
   - mit einer Prozesskontrollvorrichtung, die mit der Temperaturerfassungsvorrichtung und mit der Leistungssteuervorrichtung zur Regelung der Leistungssteuervorrichtung verbunden ist, **dadurch gekennzeichnet,**
   - **dass** die Prozesskontrollvorrichtung eine Stromsteuervorrichtung aufweist, mit welcher, insbesondere bei einem fehlendem Messsignal der Temperaturerfassungseinrichtung, die Leistungssteuervorrichtung steuerbar ist.

2. Dentalofen nach Anspruch 1, **dadurch gekennzeichnet, dass** die Stromsteuervorrichtung mit der Funktion ausgebildet ist, an die Leistungssteuervorrichtung Steuersignale zu übermitteln, so dass ein konstanter Strom zu einem bestimmten Zeitpunkt über eine definierte Zeit an das Heizelement abgegeben wird.

3. Dentalofen nach Anspruch 2, **dadurch gekennzeichnet, dass** die Stromsteuervorrichtung mindestens ein hinterlegtes Stromsteuerprofil aufweist, welches von der Stromsteuervorrichtung über einen Zeitablauf abfahrbar ist, so dass die Leistungssteuervorrichtung einen Strom gemäß dem Stromsteuerprofil über den Zeitablauf in das Heizelement einprägt.

4. Dentalofen nach Anspruch 3, **dadurch gekennzeichnet, dass** ein betimmtes Stromsteuerprofil aus unterschiedlichen Stromsteuerprofilen in Abhängigeit von der erfassten Temperatur im Heizraum und/oder von dem Werkstoff des Heizelements auswählbar ist.

5. Dentalofen nach einem der Ansprüche 1 bis 4, **dadurch gekennzeichnet, dass** die Temperaturerfassungsvorrichtung das Heizelement umfasst und die Temperatur des Heizelements erfasst durch Ermittlung des Widerstands vom Heizelement oder hierzu gleichwirkende Parameter, insbesondere durch Messung des Stroms beim Anlegen einer Spannung oder Messen des Spannungsabfalls beim Durchfließen des Heizelements mit Strom.

6.  Verfahren zum Betrieb eines Dentalofens, insbesondere zur Vortrocknung von Dentalrestaurationsteilen oder zur Entbinderung von Dentalrestaurationsteilen,

- mit einem Heizraum und mindestens einem elektrischen Heizelement, das von einer Leistungssteuervorrichtung angesteuert wird,
- mit einer Temperaturerfassungsvorrichtung, mit welcher die Temperatur des Dentalrestaurationsteils direkt im Heizraum erfasst wird,
- mit einer Prozesskontrollvorrichtung, die mit der Temperaturerfassungsvorrichtung und mit der Leistungssteuervorrichtung verbunden ist und mit der die Leistungssteuervorrichtung geregelt wird, **dadurch gekennzeichnet,**
- **dass** die Prozesskontrollvorrichtung eine Stromsteuervorrichtung aufweist, mit welcher, insbesondere bei einem fehlendem Messsignal der Temperaturerfassungseinrichtung, die Leistungssteuervorrichtung angesteuert wird.

7.  Verfahren nach Anspruch 6, **dadurch gekennzeichnet, dass** vor Beginn des Vortrocknens von der Prozesskontrollvorrichtung geprüft wird, ob die Temperatur des Heizraums unterhalb einer von der Temperaturerfassungsvorrichtung erfassten Temperaturschwelle liegt und im positiven Fall in einen Stromsteuerbetrieb in der Prozesskontrollvorrichtung geschaltet wird, so dass das Heizelement von der Stromsteuervorrichtung gesteuert wird.

8.  Verfahren nach Anspruch 6, **dadurch gekennzeichnet, dass**, insbesondere beim Entbindern, sobald ein ungewöhnlicher Anstieg der Temperatur im Heizraum von der Temperaturerfassungsvorrichtung erfasst und an die Prozesskontrollvorrichtung übermittelt wird, die Leistungssteuervorrichtung über die Stromsteuervorrichtung mit einem Stromsteuerprofil angesteuert wird, das exothermen Reaktionen entgegenwirkt.

9.  Verfahren nach einem der Ansprüche 6 bis 8, **dadurch gekennzeichnet, dass** das Heizelement von der Prozesskontrollvorrichtung grundsätzlich in einem Regelbetrieb, insbesondere bei Unterdruck im Heizraum, während einem Wärmebehandlungsprozess des Dentalrestaurationsteils geregelt wird, und dass beim Einlassen kalter Luft, in den Heizraum in einen Stromsteuerbetrieb in der Prozesskontrollvorrichtung umgeschaltet wird, so dass das Heizelement von der Stromsteuervorrichtung gesteuert wird.

10. Verfahren nach einem der Ansprüche 6 bis 9, **dadurch gekennzeichnet, dass** von der Prozesskontrollvorrichtung eine Wartezeit $t_{cool}$ ab dem Zeitpunkt begonnen wird, sobald die Wärmebehandlung durch Zufuhr elektrischer Energie gestoppt wird und der Heizraum geöffnet wird und die Wartezeit $t_{cool}$ zu dem Zeitpunkt beendet wird, in dem die Temperatur des Heizraums unter einen vorgegebenen Wert, insbesondere 400 °C, gefallen ist.

11. Verfahren nach Anspruch 10, **dadurch gekennzeichnet, dass** die Wartezeit tcool aus zumindest drei Parametern berechnet wird: der gesamten Wärmebehandlungszeit $t_{duration}$ des Dentalrestaurationsteils einschließlich einer Vortrocknungsphase und dem Wärmebehandlungsprozess, der maximal erreichten Temperatur $T_{max}$ und der erreichten Temperatur in einer Abkühlphase $T_{open}$ zum Zeitpunkt, wenn der Heizraum geöffnet wird, wobei die Temperatur von der Temperaturerfassungsvorrichtung erfasst wird.

12. Verfahren nach Anspruch 11, **dadurch gekennzeichnet, dass** die Wartezeit tcool durch Bildung eines Polynoms, besonders bevorzugt eines Polynoms zweiter Ordnung, aus den Parametern berechnet wird, wobei ein maximaler Wert der Wartezeit, insbesondere auf 35 min, festgesetzt ist, und dass der maximale Wert verwendet wird, wenn die Berechnung einen Wert über dem maximalen Wert ergibt.

13. Verfahren nach Anspruch 11 oder 12, **dadurch gekennzeichnet, dass** keine Wartezeit berechnet wird, wenn ein Wärmebehandlungsprozess, insbesondere während der ersten 20 sec, nach Start einer Vortrocknungsphase abgebrochen wird.

14. Verfahren nach Anspruch 6, **dadurch gekennzeichnet, dass** der Stromsteuerbetrieb bei geschlossenem, teilweise oder komplett geöffneten Dentalofen, oder unabhängig von der Kopföffnungsposition des Dentalofens, verwendet wird.

15. Verfahren nach einem der Ansprüche 6 bis 13, **dadurch gekennzeichnet, dass** der Heizraum vor dem Vortrocknen unter eine definierte Temperaturschwelle abgekühlt wird, insbesondere auf etwa 400 °C, und der Heizraum beim Vortrocknen teilweise geschlossen wird.

Fig. 1

Fig. 2

40

23

Vorgabe: Sollwert

36  38  26

Prozesskontrolle

34

25

Vorgabe: elektrisch

26

Leistungselektronik

27

Leistung

18  16

Brennkammer

Heizelement(e)

Temperatur-sensor

32  28

Messwert Temperatursensor

31

Fig. 3

S10

Programmstart

Variablen
initialisieren

Energieausfall

Prozess
fortsetzen [ja]    A1

Neustart beenden (im Falle eines Energieausfalls, der
ihn startet)
Start Intervall-Zähler
m_psBelowSinterProgStartTemp->setValue(FALSE)

Start
Überwachung

kurzer
Ausfall

S20

Zähler

Überwachung    S30

Aktualisieren der für die Wartezeitberechnung
bestehenden Modelle
  • Tmax
  • Toffen
  • Laufzeit
und berechne Neustart-Zeitstempel

beenden( ) / abbrechen( )

nein [wenn jetzt
<Neustart Zeitstempel

Stoppt Überwachungs-Zähler
aktualisiert Parameter und Zeitstempel
startet den Neustart-Zähler

Stopp
Überwachung    S40

Start Neustart
Zähler    S50

alle Zähler stoppen
alle Modelle auf Null zurücksetzen
m_psBelowSinterProgStartTemp->setValue(TRUE)

Variablen
zurücksetzen    S60

# Fig. 4

Fig. 5

EP 4 124 816 A1

Fig. 6

Fig. 7

Fig. 8

**Fig. 9**

| Programm |
| Abkühlen |
| Betriebsbereit |

VT2 Programm2

t

**Fig. 10**

| Programm |
| Abkühlen |
| Betriebsbereit |

Abkühl-Zählerr

VT2 Programm2

t

**Fig. 11**

| Programm |
| Abkühlen |
| Betriebsbereit |

Programm1

Abkühl-Zähler

VT2 Programm2

t

14 12

Programm1

Abkühl-Zähler

VT2 Programm2

Programm

Abkühlen

Betriebsbereit

t

# Fig. 12

Polynom 2 t_abkühl vs. t'_abkühl

50.0

40.0

30.0

20.0

10.0

0.0

Abschätzung t_abkühl' [min]

0.0    10.0    20.0    30.0    40.0    50.0

Messwert t_abkühl [min]

● Programme mit offenem Kopf

◆ individuelle Programme mit offenem Kopf

▲ Programme mit geschlossenem Kopf

■ individuelle Programme mit geschlossenem Kopf

# Fig. 13

| Bedingung | $t_{Dauer}$ [min] | $T_{max}$ [°C] | $T_{offen}$ [°C] | $t_{abkühl}$ Messung [min] | $t'_{abkühl}$ Schätzung [min] | Anmerkungen |
|---|---|---|---|---|---|---|
| P1 e.max CAD Superspeed Kristallisation | 10 | 870 | 800 | 7.0 offen 9.0 geschlossen | 9.1 (Polynom 2) | 14 min mit LookUp Tabelle |
| P5 e.max CAD Korrektur-/Malfarben-/Glanz-brand | 19 | 860 | 700 | 7.1 offen 8.0 geschlossen | 9.2 (Polynom 2) | 19 min mit LookUp Tabelle |
| P7 e.max ZirCAD MT Multi Standard | 75 | 1510 | 1200 | 27.1 offen 35.0 geschlossen | 37.7 (Polynom 2) | 35 min mit LookUp Tabelle |
| P8 e.max ZirCAD LT Speed | 29 | 1480 | 1200 | 22.6 offen 30.0 geschlossen | 33.6 (Polynom 2) | 35 min mit LookUp Tabelle |

Fig. 14

Europäisches Patentamt
European Patent Office
Office européen des brevets

# EUROPÄISCHER RECHERCHENBERICHT

**Nummer der Anmeldung**

EP 21 18 8267

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 3 760 956 A1 (IVOCLAR VIVADENT AG [LI]) 6. Januar 2021 (2021-01-06) * Absätze [0018], [0024], [0043] – [0047], [0110], [0132]; Ansprüche 1, 6-8,; Abbildungen 4-7 * * Absatz [0136] – Absatz [0142] * * Absatz [0152] * | 1-15 | INV. F27D21/00 F27B17/02 F27D19/00 |
| X | DE 20 2010 005938 U1 (DEKEMA DENTAL KERAMIKOEFEN GMBH [DE]) 29. August 2011 (2011-08-29) * Absatz [0011] – Absatz [0018]; Ansprüche 1-10; Abbildung 1 * * Absatz [0023] – Absatz [0028] * | 1-15 | |
| A | KR 101 848 316 B1 (ADD IN [KR]) 12. April 2018 (2018-04-12) * Zusammenfassung; Abbildungen 1-7 * | 1,6 | |
| A | KR 2020 0142918 A (DAEHO I&T CO LTD [KR]) 23. Dezember 2020 (2020-12-23) * Zusammenfassung; Abbildungen 1-11 * | 1,6 | RECHERCHIERTE SACHGEBIETE (IPC) |
| A | EP 2 098 189 A1 (IVOCLAR VIVADENT AG [LI]) 9. September 2009 (2009-09-09) * das ganze Dokument * | 1-15 | F27B F27D |

Der vorliegende Recherchenbericht wurde für alle Patentansprüche erstellt

| Recherchenort | Abschlußdatum der Recherche | Prüfer |
|---|---|---|
| München | 4. Februar 2022 | Gavriliu, Alexandru |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

**EP 21 18 8267**

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

**04-02-2022**

| Im Recherchenbericht angeführtes Patentdokument | Datum der Veröffentlichung | Mitglied(er) der Patentfamilie | Datum der Veröffentlichung |
|---|---|---|---|
| EP 3760956 A1 | 06-01-2021 | EP 3760956 A1 | 06-01-2021 |
| | | WO 2021001561 A1 | 07-01-2021 |
| DE 202010005938 U1 | 29-08-2011 | DE 202010005938 U1 | 29-08-2011 |
| | | EP 2560573 A1 | 27-02-2013 |
| | | US 2013032586 A1 | 07-02-2013 |
| | | WO 2011131350 A1 | 27-10-2011 |
| KR 101848316 B1 | 12-04-2018 | KEINE | |
| KR 20200142918 A | 23-12-2020 | KEINE | |
| EP 2098189 A1 | 09-09-2009 | DE 102008012579 A1 | 17-09-2009 |
| | | EP 2098189 A1 | 09-09-2009 |
| | | JP 2009207900 A | 17-09-2009 |
| | | US 2009225806 A1 | 10-09-2009 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 914953 A